# EUROPEAN PATENT APPLICATION

(11) **EP 4 693 528 A1**
(43) Date of publication of application: **11.02.2026**
(21) Application number: 24780667.2
(22) Date of filing: 28.03.2024
(51) Int. Cl.: H01M 4/86, C04B 41/87, C23C 4/11, H01M 8/12

(54) **POWDER FOR THERMAL SPRAYING**

(30) Priority: 31.03.2023 JP 2023058417
(71) Applicant: Fujimi Incorporated, Kiyosu-shi, Aichi 452-8502 (JP)
(72) Inventor: OKAMOTO, Naoki, Kiyosu-shi, Aichi 452-8502 (JP); MASUDA, Takaya, Kiyosu-shi, Aichi 452-8502 (JP); IBE, Hiroyuki, Kiyosu-shi, Aichi 452-8502 (JP)
(74) Representative: Maiwald GmbH
(86) International application number: PCT/JP2024/012706
(87) International publication number: WO 2024/204567

(57) **Abstract**

Provided is a technique for enhancing a uniformity of components in a thermal-sprayed coating. The herein disclosed powder for thermal spraying is a powder for thermal spraying that is used to form an electrode of a solid oxide fuel cell or a solid oxide electrolysis cell. This powder for thermal spraying has a peak within a range equal to or more than 0.15 µm and not more than 1 µm, on a log differential pore volume distribution for a pore diameter being equal to or less than 1 µm obtained by a mercury penetration method

## Description

### [Technical Field]

The present application claims the priority based on Japanese Patent Application No. 2023-058417 filed on March 31, 2023, the entire contents of which are incorporated in the present specification by reference.

The present disclosure relates to a powder for thermal spraying.

### [Background Art]

A solid oxide fuel cell (SOFC) and a solid oxide electrolysis cell (SOEC) each includes an air electrode, a fuel electrode, and a solid electrolyte layer. Regarding this, the fuel electrode for the solid oxide fuel cell disclosed by Patent Document 1 is characterized by being obtained by firing a particle mixture consisted of electrolyte substance particles, whose average particle diameter D₅₀ is 0.1 to 0.6 µm, and of nickel oxide particles, whose average particle diameter D₅₀ is 0.5 to 1.5 µm, the particle mixture having a mass rate of the electrolyte substance particles and the nickel oxide particles that is 35:65 to 50:50. This cited document describes that, by the configuration, an interface resistance between the fuel electrode and the electrolyte can be reduced. Patent Document 2 discloses a nickel-ion conductive ceramics mix powder that is used for the fuel electrode. This mix powder includes metal nickel particles (A) whose median diameter is equal to or more than 10 nm and not more than 200 nm, and includes ion conductive ceramic particles (B) whose median diameter is equal to or more than 10 nm and not more than 200 nm. This mix powder is characterized by having a content amount of a nickel element contained in this mix powder and a content amount of the ion conductive ceramic particles satisfy a volume ratio [nickel element]/[ion conductive ceramic particles] = 20/80 to 80/20. This cited document describes that it is possible to achieve both a high catalyst activity and a high electrically conductive property to decrease an inside resistance value so as to improve an operation efficiency of a function material.

### [Citation List]

### [Patent Literature]

[Patent Document 1] Japanese Patent Application Publication No. 2009-266713
[Patent Document 2] Japanese Patent Application Publication No. 2021-28417

### [Summary of Invention]

### [Technical Problem]

Anyway, the fuel electrode is a porous membrane, contains ion conductive ceramic particles and metal particles, and is provided with a void formed between the particles (see Patent Document 1 and Patent Document 2). For the fuel electrode as described above, it is required to uniformly disperse the ceramic particles, the metal particles, and the voids.

In view of a situation as described above, the present disclosure has an object to provide a technique for enhancing the uniformity of the components in a thermal-sprayed coating.

### [Solution to Problem]

The herein disclosed powder for thermal spraying is a powder for thermal spraying that is to form an electrode of a solid oxide fuel cell or a solid oxide electrolysis cell. The powder for thermal spraying has a peak within a range equal to or more than 0.15 µm and not more than 1 µm, on a log differential pore volume distribution whose pore diameter is equal to or less than 1 µm obtained with a mercury penetration method. By using the powder for thermal spraying that has the configuration described above, it is possible to enhance the uniformity of components in the thermal-sprayed coating.

In one preferable aspect of the herein disclosed powder for thermal spraying, a powder for thermal spraying contains composite particles that comprise ceramic particles having an ion conductive property, and comprise transition metal compound particles. By using the powder for thermal spraying that has the configuration described above, it is possible not only to enhance the uniformity of components in the thermal-sprayed coating, but also to impart the electrically conductive property to the thermal-sprayed coating.

In one preferable aspect of the herein disclosed powder for thermal spraying, composite particles comprise an area having no particle interface at a contact part where a primary particle and another primary particle are attached with each other. In accordance with such a configuration, it becomes easy to implement a desired pore diameter distribution for the powder for thermal spraying. Thus, it is possible to further enhance the uniformity of components in the thermal-sprayed coating.

In another preferable aspect of the herein disclosed powder for thermal spraying, a ratio of ceramic particles and transition metal compound particles (ceramic particles: transition metal compound particles) is 60:40 to 20:80. In accordance with such a configuration, it is possible to enhance an ion conductive property of the formed thermal-sprayed coating and additionally to suppress a reduction in an electrical conductivity of the electrode. By this, it is possible to enhance an operating efficiency of the SOFC or the SOEC.

In another preferable aspect of the herein disclosed powder for thermal spraying, a median diameter (D₅₀) based on a laser diffraction scattering method is equal to or more than 10 µm and not more than 100 µm. In accordance with such a configuration, it is possible to enhance a flowability of the powder for thermal spraying.

In another preferable aspect of the herein disclosed powder for thermal spraying, ceramic particles are zirconia particles containing a rare earth metal oxide. The ceramic particles described above are suitable for implementing the effect of the herein disclosed technique. It is preferable that transition metal compound particles are nickel oxide particles. The transition metal compound particles described above are suitable for implementing the effect of the herein disclosed technique.

In a preferable aspect of the herein disclosed powder for thermal spraying, a temperature at 3% weight increase time is equal to or more than 470°C and not more than 570°C, when a powder for thermal spraying subjected to a reduction process at 800°C processing temperature for 2 hours under a hydrogen gas atmosphere is heated under an air atmosphere at 10 K/min temperature rising speed from a room temperature to 1200°C and then a thermogravimetry analysis is performed. In accordance with such a configuration, when the thermal-sprayed coating formed from this powder for thermal spraying is used to form an electrode, it is possible to enhance the electrically conductive property of the electrode.

In a preferable aspect of the herein disclosed powder for thermal spraying, a peak is in a range equal to or more than 0.15 µm and not more than 0.23 µm. In accordance with such a configuration, it is possible to further enhance the uniformity of components in the thermal-sprayed coating.

### [Brief Description of Drawings]

FIG. 1 is a cross section view of a SOFC 10.
FIG. 2 is a plan view image of a powder for thermal spraying of Example 3.
FIG. 3 is an enlarged image of FIG. 2.
FIG. 4 is a cross section view image of the powder for thermal spraying of Example 3.
FIG. 5 is a plan view image of the powder for thermal spraying of Example 4.
FIG. 6 is an enlarged image of FIG. 5.
FIG. 7 is a cross section view image of the powder for thermal spraying of Example 4.
FIG. 8 is a plan view image of the powder for thermal spraying of Comparative example.
FIG. 9 is an enlarged view of FIG. 8.
FIG. 10 is a cross section view image of the powder for thermal spraying of Comparative example.
FIG. 11 is a graph that shows a log differential pore volume distribution of each example.
FIG. 12 is a graph that shows the log differential pore volume distribution of each example.

### [Description of Embodiments]

Below, a preferred embodiment for a herein disclosed technique will be explained. Incidentally, the matters other than matters particularly mentioned in this description but required for implementing the present disclosure can be understood as a design matter of a person skilled in the art based on a conventional technique in this field. The technique disclosed herein can be implemented on the basis of contents disclosed in the present description and of a common general technical knowledge in this field. Incidentally, a wording "X to Y" representing a numerical value range in this description means "equal to or more than X and not more than Y" unless otherwise noted, and further means a range "more than X and less than Y", a range "more than X and not more than Y", and a range "equal to or more than X and less than Y".

### <Definition>

In the present description, a term "powder for thermal spraying" represents a powdery material that is used for thermal spraying. In the present description, a term "composite particle" represents a particle that is configured with mutually different plural materials and that is a particulate (formed in a particle shape) in which these plural materials are mutually bound to be in an integral manner so as to show an action as one particle. As the composite particles, for example, it is possible to use granulated particles, granulated-sintered particles, or the like, each of which is configured with at least 2 or more kinds of materials. In the present description, a term "primary particle" means a minimum unit that can be identified as a granular material based on its appearance, among morphological configuration elements which configure the powder for thermal spraying. Therefore, in a case where composite particles configuring the herein disclosed powder for thermal spraying contain secondary particles, a particle configuring the secondary particles are, for example, referred to as the primary particles. Here, the term "secondary particle" represents a particulate in which the primary particles are bound three-dimensionally to be in an integral manner so as to show an action as one particle. It is possible as the herein referred "secondary particle" to use, for example, granulated particles, or particles (granulated-sintered particles) sintered after a granulation process.

Incidentally, the wording "bound" represents that 2 or more primary particles are directly or indirectly united. The wording "bound" semantically contains, for example, a bind of the primary particle and another primary particle by a chemical reaction, a bind of having the primary particle and another primary particle be attracted to each other by a simple adsorption, a bind based on an anchor effect that an adhesion material, or the like, is entered into a space of a concave and convex part of the primary particle surface, a bind of the primary particle and another primary particle based on an effect of being attracted to each other by a static electricity, a bind of making a surface of the primary particle melt so as to be integrated, or the like. Regarding the secondary particle configured with 2 or more materials, the wording "bound" semantically contains a bind in which one of materials configures the primary particle and another of the materials melts so as to integrate the primary particle and another primary particle. In the present description, a term "raw material particle" represents a particle configuring a powder at a raw material stage used for manufacturing the herein disclosed powder for thermal spraying.

### <Measuring method of median diameter>

In the present description, a term "median diameter", which relates to the powder for thermal spraying and to the primary particle configuring the secondary particle (the powder for thermal spraying), represents a median diameter (D₅₀) at a cumulative value 50% on a volume basis particle size distribution which is measured by a particle size distribution measuring apparatus based on a laser scattering/diffraction method. For measuring the median diameter, for example, a commercially available measuring apparatus is used.

In the above described Patent Document 1 and Patent Document 2, a screen printing method, a doctor blade method, and the like, are described as a means for providing a substrate to a paste (slurry) for electrode formation containing a powder material. In contrary, the present inventor has thought to perform the thermal spraying with the powder material so as to form the electrode. The thermal spraying is a process of making the powder material be in a melt state or a half melt state and then spraying the reactant onto a substrate surface so as to implement a membrane formation, and is completely different from processes of the screen printing method, the doctor blade method, and the like. Therefore, the present inventor has examined about a configuration of the powder material (the powder for thermal spraying) that can be suitable for forming the electrode by the thermal spraying and additionally can enhance an uniformity of components on a thermal-sprayed coating.

### <Configuration of powder for thermal spraying>

The herein disclosed powder for thermal spraying might contain, for example, composite particles which contain ceramic particles and transition metal compound particles. Although it is preferable that the powder for thermal spraying consists of the composite particles containing the ceramic particles and the transition metal compound particles, the powder for thermal spraying might contain an unavoidable impurity derived from a manufacturing process of the ceramic particles, the transition metal compound particles, or the composite particles, or the like. A content rate of the unavoidable impurity with respect to the whole powder for thermal spraying is approximately equal to or less than 5 mass%, preferably equal to or less than 3 mass%, further preferably equal to or less than 1 mass%, furthermore preferably equal to or less than 0.5 mass%, or preferably in particular equal to or less than 0.1 mass%, and the content rate being closer to 0 mass% is better.

The ceramic particles have, for example, an ion conductive property. Here, it is preferable that the ceramic particles have an oxide ion conductive property. As a ceramic configuring the ceramic particles, it is possible to appropriately select the ceramic used for this kind of purpose. As the ceramic described above, for example, it is possible to use a metal oxide. As the metal oxide, for example, zirconium oxide (zirconia) and cerium oxide (ceria) can be used preferably.

As the zirconium oxide, here, a stabilized zirconia is preferable in which 1 kind of stabilizer or 2 or more kinds of stabilizers are made to be in a solid solution condition. Incidentally, the zirconia in which the stabilizer is in the solid solution condition means a zirconia including the stabilizer. As the stabilizer, it is possible to use a rare earth metal oxide, such as scandium oxide (scandia; Sc₂O₃), yttrium oxide (yttria; Y₂O₃), cerium oxide (ceria; CeO₂), gadolinium oxide (gadolinia; Gd₂O₃), and ytterbium oxide (Yb₂O₃); an alkaline earth metal oxide, such as calcium oxide (calcia; CaO), and magnesium oxide (magnesia; MgO); or the like. Preferably, the ceramic particles are zirconia particles containing the rare earth metal oxide. An effect of the herein disclosed technique is further properly implemented when the electrode (here, the fuel electrode) including the zirconia particles containing the rare earth metal oxide, as the ceramic particles, are manufactured. Among examples, scandia stabilized zirconia particles and yttria stabilized zirconia particles are used preferably.

The cerium oxide herein might be a dope ceria. The dope ceria is a ceria in which the rare earth metal oxide, such as yttrium oxide (yttria; Y₂O₃), samarium oxide (samara; Sm₂O₃), and gadolinium oxide (gadolinia; Gd₂O₃), is doped.

A median diameter of the ceramic particles is not restricted if the effect of the herein disclosed technique is implemented. The median diameter is, for example, 0.01 µm to 5 µm, preferably 0.05 µm to 2.5 µm, further preferably 0.1 µm to 1 µm, or furthermore preferably 0.1 µm to 0.5 µm. By making the median diameter of the ceramic particles be set in the range, it is possible to enhance a dispersibility of the ceramic particles in the composite particles, and consequently it is possible to enhance the uniformity of components in the thermal-sprayed coating. By this, it is possible to enhance an operating efficiency of the SOFC or the SOEC.

The transition metal compound is to contain a substance having a metallic property, such as alloy consisting of this transition metal element and at least any of the other metal element and a semimetal element, solid solution, and intermetallic compound, and to contain a chemical compound (for example, an oxide, or the like) with this transition metal element and a non-metal element. As the transition metal compound, for example, it is possible to use an oxide (the transition metal oxide), or the like, of 3d transition element, such as titanium (Ti), vanadium (V), chromium (Cr), manganese (Mn), iron (Fe), cobalt (Co), nickel (Ni), and copper (Cu); a metal of noble metal element, such as ruthenium (Ru), rhodium (Rh), palladium (Pd), osmium (Os), iridium (Ir), platinum (Pt), gold (Au), and silver (Ag); an alloy, such as platinum-palladium alloy, and platinum-rhodium alloy; or the like. In addition to them, for example, it is possible to use an oxide (the transition metal oxide) of cobalt oxide (CoO, Co₂O₃, Co₃O₄), copper oxide (CuO, Cu₂O), silver oxide (AgO, Ag₂O), tungsten oxide (WO, W₂O₃, WO₃, WO₆), or the like. Among them, nickel oxide is preferable. The transition metal compound particles are, for example, subjected to reduction so as to become transition metal particles. Thus, the transition metal compound particles become the transition metal particles at an operating time of the SOFC or the SOEC, so as to have a catalyst activity and an electron conductivity. Thus, it is preferable that the transition metal compound particles are larger than the ceramic particles. For example, it is preferable that the median diameter of the transition metal compound particles is larger than the median diameter of the ceramic particles. The median diameter of the transition metal compound particles is not restricted if the effect of the herein disclosed technique is implemented. The median diameter is, for example, approximately 0.01 µm to 10 µm, preferably 0.05 µm to 5 µm, further preferably 0.1 µm to 2 µm, or furthermore preferably 0.1 µm to 1 µm. By making the median diameter of the transition metal compound particles be set in the range, it is possible to enhance a dispersibility of the transition metal compound particles with respect to the composite particles, and then consequently it is possible to enhance the uniformity of components in the thermal-sprayed coating. By this, it is possible to enhance the electrically conductive property of the electrode of the SOFC or the SOEC.

A mix ratio (here, a mass ratio) of the ceramic particles and the transition metal compound particles in the powder for thermal spraying would become a factor that affects an ability of the SOFC or the SOEC, the uniformity of the components in the thermal-sprayed coating, or the like. In view of the perspective described above, it is preferable that the mass ratio of the ceramic particles and the transition metal compound particles (ceramic particles: transition metal compound particles) is, for example, 80:20 to 20:80, or 70:30 to 30:70. In one preferable aspect, the mass ratio (ceramic particles: transition metal compound particles) is 60:40 to 20:80. When the mass ratio of the ceramic particles and the transition metal compound particles (ceramic particles: transition metal compound particles) is 80:20 to 20:80 or 70:30 to 30:70, it is possible to enhance the electrical conductivity of the electrode of the formed thermal-sprayed coating and further suppress an reduction of an ion conductive property.

The composite particles would be, for example, are particle manufactured by mixing the ceramic particles and the transition metal compound particles. Though the composite particles are particles containing the ceramic particles and the transition metal compound particles which are materials different from each other, the ceramic particles and the transition metal compound particles are integrated together, and thus the composite particles show an action as one particle. Therefore, for example, if the ceramic particles and the transition metal compound particles are dispersed well in the composite particles, the uniformity of the components in the thermal-sprayed coating can be consequently enhanced.

A form of the composite particles is not restricted, if the ceramic particles and the transition metal compound particles are integrated and then the effect of the herein disclosed technique can be implemented. The composite particles might be, for example, granulated particles. In that case, the granulated particles (the secondary particles) can be manufactured, for example, by adding and mixing the ceramic particles (the primary particles), the transition metal compound particles (the primary particles), and the other arbitrary component (for example, a binder, a solvent, or the like) so as to granulate the mixture.

It is preferable that the composite particles are particles which have an area including no particle interface at a contact part where the primary particle and another primary particle are attached with each other. It is preferable that the composite particles are sintered particles. The sintered particles can be manufactured by manufacturing the granulated particles from the ceramic particles and the transition metal compound particles as described above, and then by sintering the granulated particles (this kind of particles might be referred to as a granulated-sintered particles). Regarding the sintered particles, with respect to the ceramic particles and the transition metal compound particles, a neck is formed at the contact part of the primary particle and another primary particle by sintering, the neck grows in accordance with advance of solid phase diffusion at the neck, and binding is implemented in a state where the point contact is changed to the surface contact. The binding described above is implemented, for example, by having at least a part of the ceramic particles or the transition metal compound particles be diffused. It is preferable that the ceramic particles and the transition metal compound particles, which are the primary particles, are bound in a state where the contact part includes an area having no particle interface. By this, for example, the electrically conductive property of the electrode would be enhanced. In the granulated-sintered particles, more than the granulated particles before the sintered process, the strength is enhanced. Thus, by making the composite particles be granulated-sintered particles, a desired pore diameter distribution can be implemented in the powder for thermal spraying, and can become to be easily maintained. Thus, by using the granulated-sintered particles described above, it is possible to manufacture the thermal-sprayed coating in which the uniformity of the components is enhanced.

The median diameter (D₅₀) of the herein disclosed powder for thermal spraying at a cumulative value 50% with respect to a volume basis particle size distribution based on a laser diffraction scattering method, which is not particularly restricted, can be set to be a size suitable to a standard of a used apparatus. The median diameter is, for example, equal to or more than 1 µm. As the median diameter becomes larger, for example, it is possible to enhance a handleability, a flowability, or the like, of the material for thermal spraying. In view of the perspective described above, the median diameter is appropriately equal to or more than 3 µm, preferably equal to or more than 5 µm, further preferably equal to or more than 10 µm, or furthermore preferably equal to or more than 15 µm. In contrary, if the median diameter becomes too larger, there is concern that melt of the powder for thermal spraying at the thermal spraying time becomes insufficient. In view of the perspective described above, the median diameter is, for example, equal to or less than 300 µm, preferably equal to or less than 200 µm, further preferably equal to or less than 100 µm, or furthermore preferably equal to or less than 50 µm.

Anyway, with respect to the powder for thermal spraying, in a case where a measurement with a mercury penetration method was performed, for example, regarding a log differential pore volume distribution within a range in which the pore diameter was equal to or less than 1 µm, the pore diameter derived from a void between a primary particle and another primary particle (in other words, a void in the composite particles) can be measured. In contary, regarding the log differential pore volume distribution within a range in which the pore diameter was larger than 1 µm, the pore diameter derived from the void between a secondary particle and another secondary particle can be measured. Thus, by analyzing the log differential pore volume distribution within a range in which the pore diameter was equal to or less than 1 µm, it is possible to grasp a binding state (a necking state) of the ceramic particles and the transition metal compound particles in the powder for thermal spraying and grasp a formation degree of the voids in the composite particles.

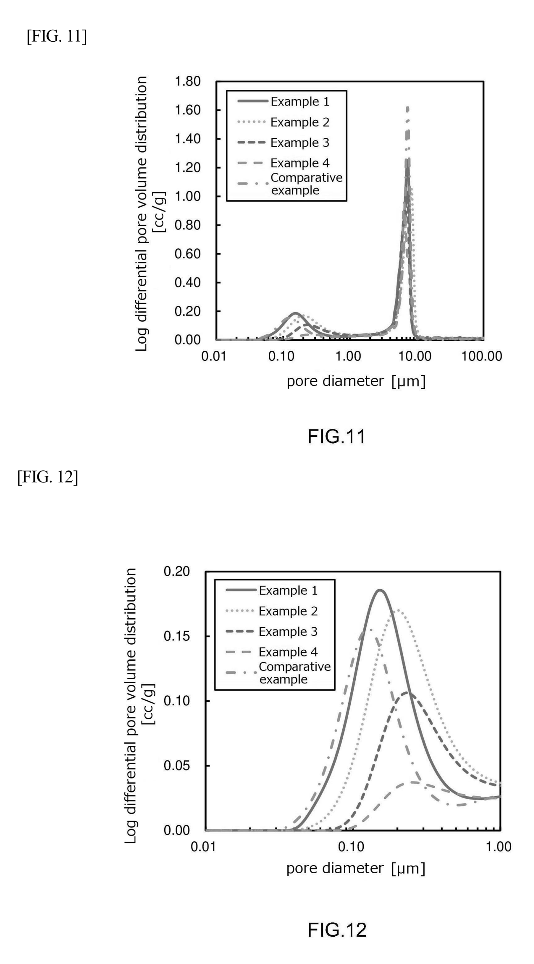

It is preferable for the herein disclosed powder for thermal spraying that, regarding a log differential pore volume distribution for the pore diameter being equal to or less than 1 µm obtained by a mercury penetration method, there is a peak in a range equal to or more than 0.15 µm and not more than 1 µm. By this, it is shown that the binding state (the necking state) of the ceramic particles and the transition metal compound particles in the composite particles is under a preferable state so as to form an appropriate void in the composite particles. Thus, by performing the thermal spraying with the powder for thermal spraying as described above, it is possible to form the thermal-sprayed coating in which the uniformity of the components is enhanced. In view of the perspective described above, it is preferable that, regarding a log differential pore volume distribution for the pore diameter being equal to or less than 1 µm obtained by a mercury penetration method, the powder for thermal spraying has a peak, for example, within a range from 0.15 µm to 0.5 µm, further preferably within a range from 0.15 µm to 0.3 µm, or furthermore preferably within a range from 0.15 µm to 0.23 µm. Incidentally, the term "peak" herein represents a portion (a high frequency portion) which protrudes and whose height is higher on the log differential pore volume distribution (a curve line) (see FIG. 11). In other words, the term "peak" can be expressed as a point at which a code of an inclination of its tangential line is changed from "+" to "-" on the log differential pore volume distribution (the curve line).

Incidentally, the mercury penetration method is a method for obtaining the pore diameter distribution of the powder, based on a relation between the pressure applied for entering the mercury into the pore of the powder and a mercury amount entered by the press fitting into the pore of the powder. The pore distribution measurement based on the mercury penetration method is performed, for example, on the basis of JIS R1655:2003 (a molded body pore diameter distribution test method with the mercury penetration method of the fine ceramics). In the present description, the term "log differential pore volume distribution" might be referred to as a logarithmic differentiation pore diameter frequency distribution, dV/d (log D) (here, D represents a diameter of the pore, and V represents its pore volume), or the like, which is an expression form of the pore distribution in generally used for expressing the pore distribution having a comparatively wide pore diameter range.

The log differential pore volume distribution can be made on the basis of the relation of the mercury press fitting amount (in other words, the pore volume) corresponding to a change of the unit pore diameter (which might be a change of the unit pressure) obtained with the measurement of the pore diameter distribution based on the mercury penetration method. In particular, the log differential pore volume distribution can be made by obtaining a value in which a difference pore volume (dV) being an increase amount of the pore volume is divided by a difference value d (log D) of the pore diameter in a logarithm handling manner, and then plotting the obtained value with respect to the average pore diameter on the pore diameter area (see FIG. 11). In the present description, based on a pore diameter distribution characteristics obtained by measuring the pore diameter distribution with the mercury penetration method in which the measurement range is set to be 0.0036 µm to 1 µm, an apex of the peak, or the like, is grasped. For example, on the log differential pore volume distribution for the herein disclosed powder for thermal spraying (here, the composite particles), 2 peaks can be obtained (see FIG. 11). The peak at a large diameter side among the 2 peaks might be a peak derived from the pore between the composite particles and another composite particle contained in the powder for thermal spraying. In contrary, the peak at a small diameter side among the 2 peaks might be a peak derived from the pore of the composite particles. Then, the term "peak" in the present description is not the peak derived from a gap between the composite particles and another composite particle, but the peak derived from the pore of the composite particles, and is the peak whose height is the highest on the log differential pore volume distribution (curve line) with the pore diameter being equal to or less than 1 µm.

After the thermal spraying with the powder for thermal spraying is performed and then the thermal-sprayed coating is formed, the thermal-sprayed coating described above is subjected to the reduction process so as to be used as the electrode of the SOFC or the SOEC. By this reduction process, on the thermal-sprayed coating, the transition metal compound component derived from the transition metal compound particles are reduced so as to be the transition metal component. It is preferable that the transition metal component is hardly oxidated because of being a main component for making the electrode have the electrically conductive property. In view of the perspective described above, it is preferable regarding the herein disclosed powder for thermal spraying that a temperature at 3% weight increase time is equal to or more than 470°C and not more than 570°C, when the powder for thermal spraying subjected to the reduction process at 800°C processing temperature for 2 hours under the hydrogen gas atmosphere is heated under the air atmosphere at 10 K/min temperature rising speed from the room temperature (30°C) to 1200°C and then a thermogravimetry analysis is performed. Alternatively, in view of a perspective of implementing the effect of the herein disclosed technique, it is further preferable that the temperature at the 3% weight increase time is equal to or more than 470°C and not more than 520°C. Incidentally, the wording "temperature at the 3% weight increase time" is defined as a term "3% weight change point" in a later described test example.

Here, when a predetermined reduction process is performed on the powder for thermal spraying, the transition metal compound particles in the powder for thermal spraying are reduced so as to become the transition metal particles. In the thermogravimetry analysis, the powder for thermal spraying after the reduction process under the air atmosphere is heated and thus the transition metal particles are oxidated. By this, a weight of the powder for thermal spraying is increased. Regarding the powder for thermal spraying on which the reduction process has been performed, having the temperature, when the 3% weight increase is implemented in the thermogravimetry analysis, satisfy the range is showing that the transition metal component on the thermal-sprayed coating is hardly oxidated when the thermal-sprayed coating obtained by the thermal spraying with the powder for thermal spraying is reduced so as to become the electrode. By using the powder for thermal spraying which has this feature, it is possible to further enhance the electrically conductive property of the electrode.

### <Manufacturing method of powder for thermal spraying>

The herein disclosed powder for thermal spraying can be prepared, for example, by adding and mixing the ceramic particles and the transition metal compound particles, which are raw material particles, with the other arbitrary component so as to make the composite. Among examples, it is preferable that the powder for thermal spraying is configured with the granulated-sintered particles in which the ceramic particles and the transition metal compound particles are mixed. It is preferable, for example, that the powder for thermal spraying is a powder for thermal spraying configured with the granulated-sintered particles as the secondary particles in which each of the primary particles has a gap and three-dimensionally bound though the primary particles are formed by making each of the raw material particles (primary particles) be mixed, be granulated, and furthermore be sintered.

A granulation sintering method is a method for granulating the raw material particles in a form of the secondary particle, and then sintering the resultant so as to bind (sinter) the raw material particles with the raw material particles. In the granulation sintering method, granulating is performed, for example, by a granulation method, such as dry type granulating and wet type granulating. As the granulation method, it is possible to use, for example, a rolling granulation method, a fluid layer granulation method, a stirring granulation method, a crushing granulation method, a melt granulation method, a spray granulation method, a micro emulsion granulation method, or the like. Among them, it is possible to use the spray granulation method as a suitable granulation method.

According to the spray granulation method, for example, it is possible to manufacture the powder material with a procedure described below. In other words, at first, the raw material particles containing the ceramic particles and the transition metal compound particles are prepared, and as needed, their surfaces are stabilized with a protective agent, or the like. Then, for example, the raw material particles stabilized as needed, the binder as the arbitrary component, and an organic material, such as spacer particles, are dispersed into an appropriate solvent, so as to prepare a spray liquid. Here, the raw material particles are dispersed into the solvent, for example, by using a homogenizer, a mixing machine, such as blade type stirring machine, a dispersing machine, or the like. Then, by an ultrasonic spraying machine, or the like, a droplet is formed from the spray liquid. By making the droplet get on an air flow and pass through a spray drying apparatus (a spray dryer), the granulated particles are formed. The granulated particles obtained as described above are introduced into a predetermined firing furnace and then fired. By this, it is possible to manufacture the material for thermal spraying that consists of the granulated-sintered particles formed in the secondary particles in which the primary particles are bound (sintered) with a gap. Incidentally, the primary particles herein might have a size or a shape approximately the same as the raw material particles, or might be bound in a state where the raw material particles are grown by firing.

Incidentally, in the manufacturing step, under a state where the droplet is dried, a mix state appears where the raw material particles and the binder are uniform. The raw material particles are bonded by the binder so as to configure the mix particles. In a case where the spacer particles are used, the raw material particles and the spacer particles are bonded in the uniform mix state by the binder, so as to configure the mix particles. Then, by firing this mix particles, the binder (and the spacer particle) is lost (burn through) and further the raw material particles are sintered. By this, the secondary particles are formed to have a formation in which the primary particles are bound (sintered) with a gap. At the sinter, a part of the raw material particles might be in a liquid phase so as to contribute in binding with another particle, based on its composition, size, or the like. Thus, there is a case where the median diameter of the primary particle becomes larger than the raw material particle of the starting material. The median diameter of the secondary particles, the median diameter of the primary particles, and the size and rate of the gap formed between the primary particles can be designed in accordance with a form of desired secondary particles.

It is preferable that a concentration of the raw material particles in the spray liquid is, for example, 10 mass% to 80 mass%. As the binder being added, it is possible to use, for example, polyvinyl alcohol (PVA), carboxymethyl cellulose (CMC), or the like. As the solvent, it is possible to use, for example, water. It is preferable that an addition amount of the binder is adjusted to satisfy a rate from 0.05 mass% to 10 mass% (for example, 1 mass% to 5 mass%) with respect to a mass of the raw material particles.

In the sintering process of the granulated particles, the granulated particles are heated (fired) for 1 hour to 10 hours at a predetermined temperature (approximately 600°C to 1600°C (preferably 700°C to 1500°C, further preferably 800°C to 1400°C, or furthermore preferably 1000°C to 1300°C)) under the air atmosphere; an inert atmosphere, such as nitrogen atmosphere and rare gas atmosphere; or in vacuum. It is preferable that the predetermined temperature is, for example, a set temperature of a firing furnace. The temperature and the time for performing the heating process on the granulated particles can be suitably set to be able to manufacture the powder for thermal spraying that has the desired pore diameter distribution. The firing temperature and the time are suitably set to be able to implement the median diameter desired for the powder for thermal spraying, the temperature at which the 3% weight increase occurs based on a thermogravimetry analysis under an air atmosphere, or the like. After the heating process, as needed, the obtained granulated-sintered particles might be cracked and classified.

### <Use of powder for thermal spraying>

By performing the thermal spraying of the herein disclosed powder for thermal spraying with various thermal spraying methods, it is possible to manufacture the thermal-sprayed coating on various substrates. The powder for thermal spraying is preferably used in particular, for manufacturing the thermal-sprayed coating with a plasma thermal spraying method, such as atmospheric plasma spraying (APS), low pressure plasma spraying (LPS), and high-pressure plasma spraying. The powder for thermal spraying can be suitably used additionally for a high velocity frame thermal spraying, such as high velocity oxygen flame (HVOF) thermal spraying method, warm-spray thermal spraying method, and high velocity air flame type (HVAF) high velocity frame thermal spraying method. The powder for thermal spraying might be supplied in a powder state to the thermal spraying apparatus, or might be supplied, in a slurry state of being dispersed into an appropriate dispersion medium, into the thermal spraying apparatus.

The herein disclosed powder for thermal spraying is used, for example, in order to form the electrode of the solid oxide fuel cell (SOFC) or of the solid oxide electrolysis cell (SOEC). The powder for thermal spraying is preferably used as a material for forming the fuel electrode of the SOFC or the SOEC. The SOFC is, for example, able to take out an electric power (an electric energy) from a chemical energy generated from a combustion reaction with hydrogen and oxygen. The SOEC is, for example, able to induce a chemical reaction which generates hydrogen and oxygen from water, by applying the electric energy to the water (for example, steam).

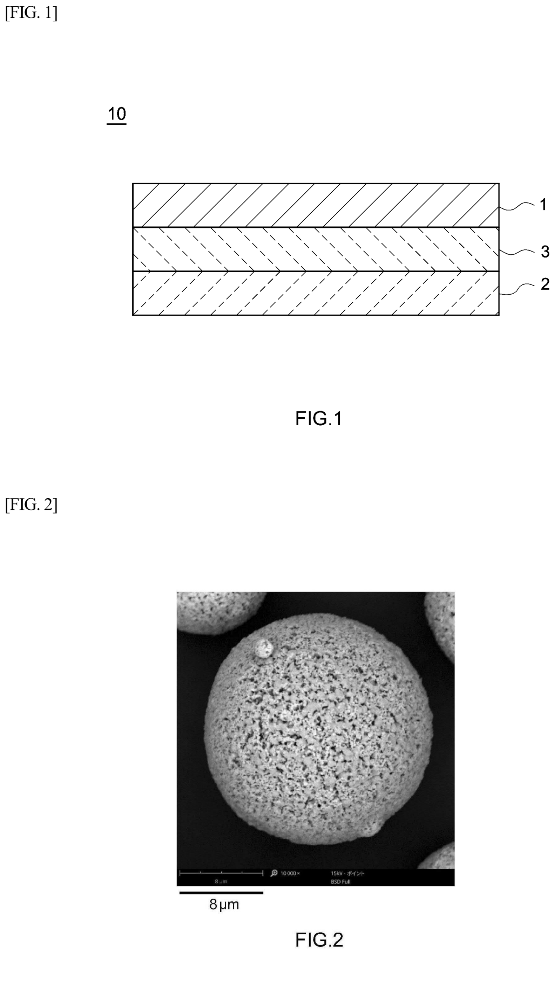

FIG. 1 is a cross section view of a SOFC 10. FIG. 1 shows a laminate structure of an electrode and a solid electrolyte layer in the SOFC 10. As shown in FIG. 1, the SOFC 10 includes a fuel electrode 1, an air electrode 2, and a solid electrolyte layer 3. In the SOFC 10, the fuel electrode 1 is an anode, and the air electrode 2 is a cathode. Incidentally, in the present description, the term "anode" means an electrode from which the electron flows out to an outside circuit. The term "cathode" represents an electrode into which the electron flows from the outside circuit.

The fuel electrode 1 herein is an electrode at which hydrogen reacts with oxide ion. In this embodiment, by the reaction with the hydrogen and the oxide ion, water is generated and the electron is released. By this electron, a power generation is carried out. As shown in FIG. 1, the fuel electrode 1 is provided on one surface of the solid electrolyte layer 3. In this embodiment, the fuel electrode 1 is formed by using the herein disclosed powder for thermal spraying.

The air electrode 2 herein is an electrode at which the oxygen in the air receives the electron. In this embodiment, at the air electrode, the supplied oxygen in the air receives the electron released from the fuel electrode 1 so as to generate the oxide ion. As shown in FIG. 1, the air electrode 2 is provided on the other surface of the solid electrolyte layer 3 (in FIG. 1, a surface at a side opposite to the surface on which the fuel electrode 1 is formed). As the air electrode 2, various air electrodes having been previously proposed might be used without particular restriction. Thus, regarding a configuration of the air electrode 2, an explanation herein is omitted.

The solid electrolyte layer 3 herein is a layer having a function of conducting the oxide ion. In this embodiment, the oxide ion generated at the air electrode 2 passes through the solid electrolyte layer 3 and then is supplied to the fuel electrode 1. As shown in FIG. 1, the solid electrolyte layer 3 is sandwiched between the fuel electrode 1 and the air electrode 2. As the solid electrolyte layer 3, various solid electrolyte layers having been previously proposed might be used without particular restriction. Thus, regarding a configuration of the solid electrolyte layer 3, an explanation herein is omitted.

A method for manufacturing the SOFC 10 can include, for example, a preparing step, a laminating step, a thermal spraying step, and a firing step. The preparing step is, for example, a step at which a green sheet of the solid electrolyte layer 3 is prepared. At this step, for example, it is preferable that a carrier sheet is coated with the slurry for forming the fix electrolyte layer 3 and the slurry is molded to have a predetermined shape and size and then dried so as to prepare the green sheet of the solid electrolyte layer 3. Regarding the method for coating the carrier sheet with the slurry in order to form the fix electrolyte layer 3, which is not particularly restricted, it is possible to use, for example, a conventional coating method, such as screen printing method and doctor blade method.

The laminating step is, for example, a step at which the green sheet of the air electrode 2 is laminated on one surface of the green sheet of the solid electrolyte layer 3. At this step, for example, one surface (here, a surface at a side opposite to the carrier sheet) of the green sheet of the solid electrolyte layer 3 is coated with the slurry for forming the air electrode 2 and the slurry is molded to have a predetermined shape and size and then dried so as to make the green sheet of the air electrode 2 be laminated on the green sheet of the solid electrolyte layer 3. Then, it is preferable that the carrier sheet is removed from the green sheet of the solid electrolyte layer 3. Regarding the method for coating the green sheet of the solid electrolyte layer 3 with the slurry for forming the air electrode 2, which is not particularly restricted, it is possible to use, for example, the conventional coating method, such as screen printing method and doctor blade method.

The thermal spraying step is, for example, a step at which the thermal spraying is performed with the herein disclosed powder for thermal spraying on the other surface of the green sheet of the solid electrolyte layer 3. At this step, for example, the thermal spraying is performed with the powder for thermal spraying on the surface of the green sheet of the solid electrolyte layer 3 at the side opposite to the laminate surface of the green sheet of the air electrode 2. By this, the thermal-sprayed coating of the herein disclosed powder for thermal spraying, which is a precursor of the fuel electrode 1, is formed.

The firing step is, for example, a step at which a laminate body of the green sheet of the solid electrolyte layer 3 and the green sheet of the air electrode 2 provided with the thermal-sprayed coating is fired. By this, the fuel electrode 1, the air electrode 2, and the solid electrolyte layer 3 are mutually sintered, so as to configure the laminate structure with the fuel electrode 1, the air electrode 2, and the solid electrolyte layer 3 on the SOFC 10.

As explained above, the herein disclosed powder for thermal spraying is a powder for thermal spraying, which is for forming the electrode of the SOFC or the SOEC. It is preferable that the powder for thermal spraying contains composite particles with ion conductive ceramic particles and transition metal compound particles. It is preferable that the powder for thermal spraying has the peak within the range equal to or more than 0.15 µm and not more than 1 µm, on the log differential pore volume distribution for the pore diameter being equal to or less than 1 µm and being obtained with the mercury penetration method.

The powder for thermal spraying contains the ceramic particles and the transition metal compound particles in a state of the composite particles. Thus, it is possible to suppress the ceramic component derived from the ceramic particles and the transition metal compound component derived from the transition metal compound particles from being unevenly distributed in the thermal-sprayed coating when the thermal spraying with the powder for thermal spraying is performed. In the powder for thermal spraying, on the log differential pore volume distribution for the pore diameter being equal to or less than 1 µm obtained with the mercury penetration method, by having the peak within the range equal to or more than 0.15 µm and not more than 1 µm, a preferable binding state (necking state) with the ceramic particles and the transition metal compound particles is implemented. Thus, by using the herein disclosed powder for thermal spraying, it is possible to enhance the uniformity of the components of the thermal-sprayed coating. It is thought that, by implementing the preferable binding state in the granule, a bind of the transition metal compound particles and another transition metal compound particles are generated so as to produce the favorable contact state between the transition metals after the reduction process. Thus, by efficiently forming the electronic pathway (the passage of the electron) due to the transition metal and another transition metal, it is possible to enhance the electrically conductive property of the electrode.

Furthermore, by using the herein disclosed powder for thermal spraying, it is possible in the thermal-sprayed coating to enhance the uniformity of the components, and it is expected to make an interface of three phases, the void, the ceramic component (the ceramic particles), and the transition metal compound component (the transition metal compound particles), be further uniformly dispersed. By forming the electrode (for example, the fuel electrode) of the SOFC or the SOEC from the thermal-sprayed coating described above, it is expected to enhance any of a power generation efficiency of the SOFC and a hydrogen production efficiency of the SOEC.

Below, a test example related to the present disclosure is explained, but the explanation is not intended to restrict the present disclosure into the below described test example. Incidentally, in the explanation described below, an expression "%" is based on a mass basis, if there is no particular explanation.

### <Manufacture example>

### (Example 1)

A starting material containing yttria stabilized zirconia (YSZ) particles as the ceramic particles, nickel oxide (NiO) particles as the transition metal compound particles, polyvinyl alcohol (PVA) as the binder, and water (ion exchanged water) as the solvent were prepared. The median diameter of the YSZ particles was 0.2 µm. The median diameter of the NiO particles was 0.7 µm. Each of the median diameter of the YSZ particles and the median diameter of the NiO particles is a D₅₀ diameter based on a volume basis particle size distribution measured with a laser diffraction type particle size distribution measuring apparatus (Malvern Panalytical, Mastersizer 3000). Incidentally, in consideration of a dispersion state during the particle size distribution measurement on each powder, the median diameter measurements for the YSZ particles and the NiO particles were performed under a wet type dispersion with water. When a total of the YSZ particles and the NiO particles was treated as 100%, a rate of the YSZ particles was 40% and a rate of the NiO particles was 60%. When a whole of the starting material was treated as 100%, PVA was 2% and water was 50%.

Then, the starting material was mixed and dispersed so as to prepare the slurry. This slurry was sprayed into the air flow by a spray granulating machine and then dried, so that the granulated particles were manufactured. Then, the granulated particles were put into a sagger made of alumina and then fired under the air atmosphere, so that the granulated-sintered particles were manufactured. At this firing process, the sagger in which the granulated particles were kept was held at 950°C temperature for 4 hours. Then, the granulated-sintered particles were cracked and classified, so that the powder for thermal spraying having a predetermined particle size distribution was obtained. The powder for thermal spraying described above is treated as the powder for thermal spraying in accordance with the present example.

### (Example 2)

The firing temperature at the firing process on the granulated particles was set to be 1040°C. Regarding matters other than this, a material and a procedure similar to Example 1 were used so as to manufacture the powder for thermal spraying in accordance with the present example.

### (Example 3)

The firing temperature at the firing process on the granulated particles was set to be 1200°C. Regarding matters other than this, a material and a procedure similar to Example 1 were used so as to manufacture the powder for thermal spraying in accordance with the present example.

### (Example 4)

The firing temperature at the firing process on the granulated particles was set to be 1300°C. Regarding matters other than this, a material and a procedure similar to Example 1 were used so as to manufacture the powder for thermal spraying in accordance with the present example.

### (Comparative example)

The firing temperature at the firing process on the granulated particles was set to be 200°C. Regarding matters other than this, a material and a procedure similar to Example 1 were used so as to manufacture the powder for thermal spraying in accordance with the present example.

### [SEM observation]

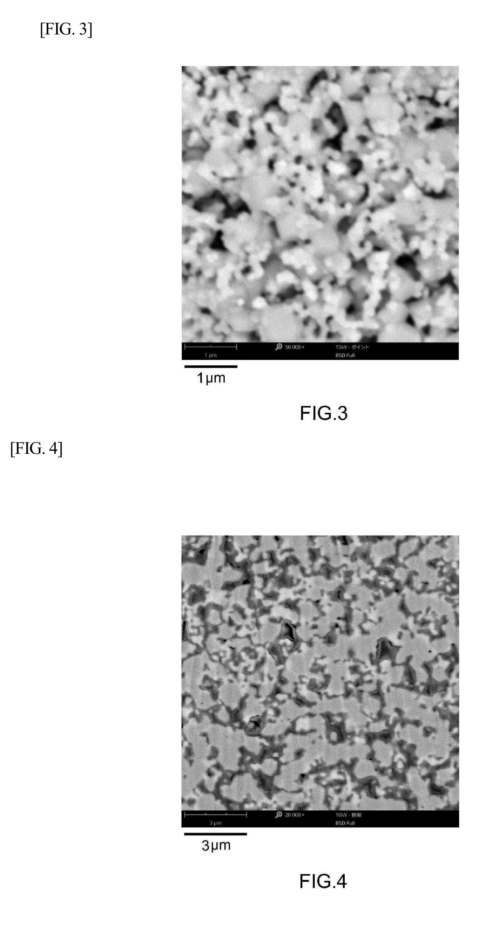

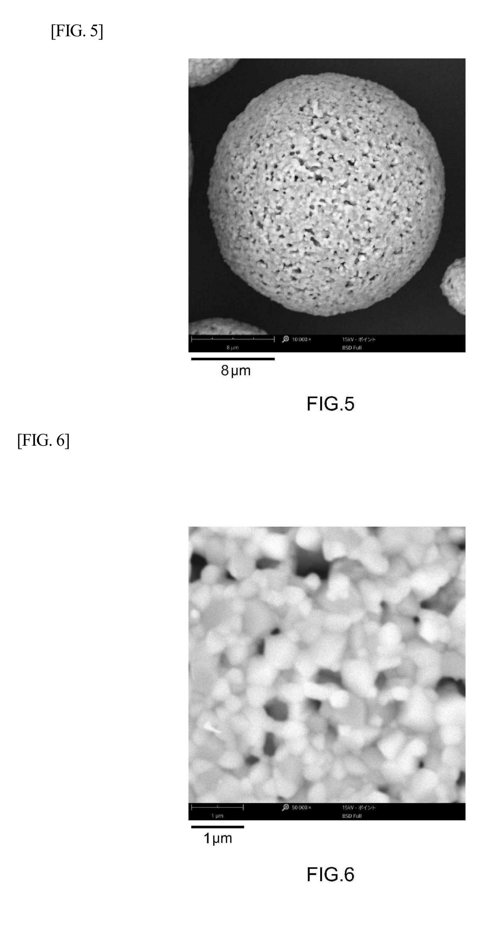

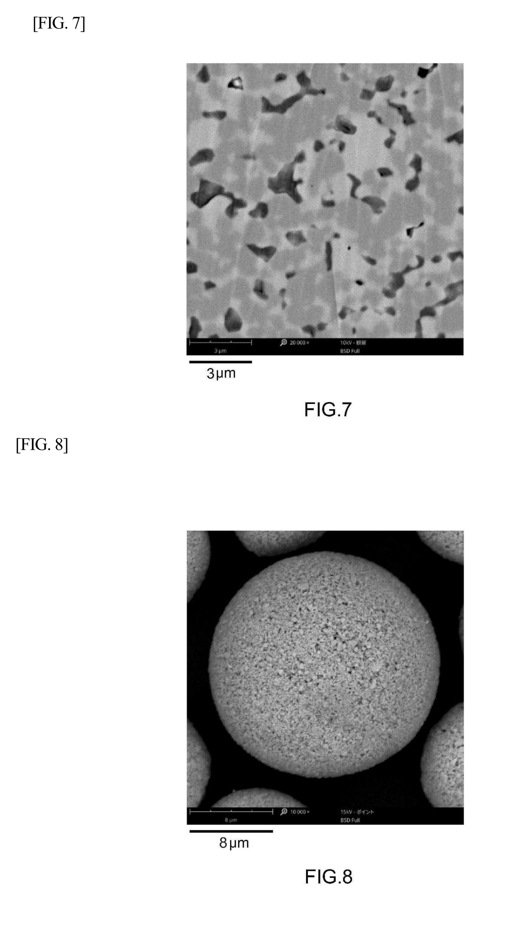

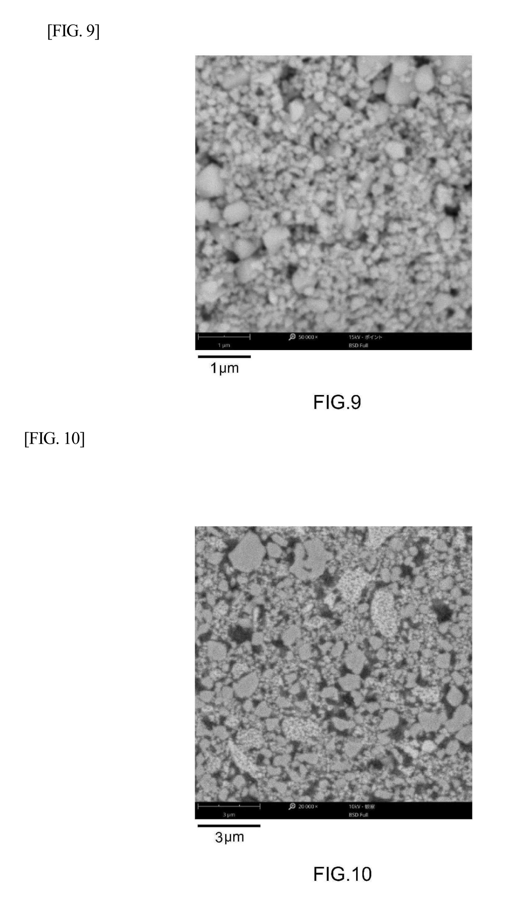

Regarding the powders for thermal spraying of Example 1 to Example 4 and the powder for thermal spraying of Comparative example, a desktop SEM (Phenom-World, Phenom ProX) was used so as to obtain cross section view images and plan view images. For reference, the cross section view images and the plan view images of the powders for thermal spraying were shown in FIG. 2 to 10, as described below. FIG. 2 is the plan view image of the powder for thermal spraying of Example 3. FIG. 3 is an enlarged image of FIG. 2. FIG. 4 is the cross section view image of the powder for thermal spraying of Example 3. FIG. 5 is the plan view image of the powder for thermal spraying of Example 4. FIG. 6 is an enlarged image of FIG. 5. FIG. 7 is the cross section view image of the powder for thermal spraying of Example 4. FIG. 8 is the plan view image of the powder for thermal spraying of Comparative example. FIG. 9 is an enlarged view of FIG. 8. FIG. 10 is the cross section view image of the powder for thermal spraying of Comparative example.

### [Measurement of median diameter]

Regarding the powders for thermal spraying of Example 1 to Example 4 and the powder for thermal spraying of Comparative example, the laser diffraction type particle size distribution measuring apparatus (Malvern Panalytical, Mastersizer 3000) was used to measure the volume basis particle size distribution so as to obtain the median diameter. Results are shown at "Median diameter (µm)" column in Table 1. Incidentally, in consideration of a dispersion state during the particle size distribution measurement on each powder, the measurement of the median diameter of the powder for thermal spraying was performed under a dry type dispersion with compressed air.

### [Pore volume]

Regarding the powders for thermal spraying of Example 1 to Example 4 and the powder for thermal spraying of Comparative example, a mercury press fitting type porosimeter (Quantachrome, POREMASTER-60) was used so as to measure the pore volume. In particular, the measurement was performed under a condition with a mercury contact angle 140° and with a surface tension 480 erg/cm² (0.480 N/m). Here, a cumulative pore volume (cc/g), whose pore diameter was equal to or less than 1 µm (in particular, a range of the pore diameter being from 0.0036 µm to 0.98 µm), was measured. The measurement result was shown at "Pore volume (cc/g)" column in Table 1.

The cumulative pore volume, in which the pore diameter was equal to or less than 1 µm and which was measured as described above, was defined as "pore volume" of each powder for thermal spraying. Regarding the most frequent diameter (a peak top position) of the log differential pore volume distribution, an object being in the range of "pore volume" defined as described above was measured. The measurement result is shown at "Peak top position (µm)" column in Table 1. FIG. 11 and FIG. 12 are graphs for showing the log differential pore volume distributions of respective examples. FIG. 12 shows that a range in the graph of FIG. 11, in which the pore diameter is equal to or less than 1 µm, is enlarged. In FIG. 11 and FIG. 12, X axis represents "pore diameter (µm)", and Y axis represents "Log differential pore volume (cc/g)". Incidentally, a reason for defining the cumulative pore volume in which the pore diameter was equal to or less than 1 µm as "pore volume" of each powder for thermal spraying is that the pore volume measured in a range, in which the pore diameter is larger than 1 µm, contains many voids between particles of the powder for thermal spraying (here, voids between the secondary particles).

### [Thermogravimetry analysis]

Regarding the powders for thermal spraying of Example 1 to Example 4 and the powder for thermal spraying of Comparative example, the reduction process was performed. On each powder for thermal spraying after the reduction process, the thermogravimetry analysis was performed with a thermogravimetry differential thermal analyzer (Netzsch, STA 2500 Regulus). In particular, a weight change of each powder for thermal spraying was measured, when 37.5 mg ±2.5 mg of each powder for thermal spraying, on which the reduction process was performed, was put on an alumina pan, and had temperature rising from the room temperature (30°C) to 1200°C at 10 K/min of temperature rising speed under the air atmosphere. A temperature at the time when a 3% weight increase was observed was defined as the term "3% weight change point". The result was shown at "3% weight change point (°C)" in Table 1. Incidentally, in the reduction process, each powder for thermal spraying was kept at 800°C temperature for 2 hours under a reduction atmosphere (a hydrogen gas atmosphere).

### <Manufacture of thermal-sprayed coating>

With the powders for thermal spraying of Example 1 to Example 4 and the powder for thermal spraying of Comparative example, atmospheric pressure plasma thermal spraying was performed so as to manufacture the thermal-sprayed coating. As the substrate, a substrate made of aluminum was used. The thermal spraying condition was as described below.
Thermal spraying machine: SG-100 (Praxair)
Powder supplying device: Model 1264 (Praxair)
Plasma working gas:
   Argon (Ar) gas (50 psi (0.34 MPa)); and
   Helium (He) gas (50 psi (0.34 MPa))
   Plasma output: 34 kW
   Plasma generation voltage: 37 V
   Plasma engraftation current: 900 A
   Supply speed of powder for thermal spraying: 17.5 ±5 g/min
   Thermal spraying distance (distance from a thermal spraying gun to the substrate): 120 mm
   Thermal spraying gun traverse speed: 400 mm/s

### [Evaluation of uniformity of components in thermal-sprayed coating]

On the thermal-sprayed coating of each example manufactured as described above, a composition analysis was performed with a SEM and an energy dispersive X-ray spectrometry (EDS) (Phenom-World, Phenom ProX). In particular, operations (1) to (7) described below were performed.
(1) A composite body of the substrate made of aluminum and the thermal-sprayed coating was cut to obtain the thermal-sprayed coating which has a predetermined size, so as to obtain a test piece.
(2) The test piece was immersed into a sodium hydroxide aqueous solution to dissolve the aluminum substrate so as to isolate the thermal-sprayed coating.
(3) The reduction process was performed on the isolated thermal-sprayed coating. Incidentally, the condition for the reduction process herein is the same as the condition described at the item [Thermogravimetry analysis].
(4) The thermal-sprayed coating, on which the reduction process was performed, was embedded in an epoxy resin, and then mechanical polishing and cross-section polishing were performed.
(5) Regarding a cross section structure of the thermal-sprayed coating on a surface polished at (4), an observation view field (about 27 µm × 27 µm) with a ten-thousand-fold observation magnification was observed and analyzed with the SEM and the EDS. One visual field was divided into 16, and then quantities of the compositions in the thermal-sprayed coating of 1 divided visual field were determined with Phenom ProX, Phenom-World. Incidentally, here, the visual field was selected at an arbitrary position on the cross section structure of the thermal-sprayed coating, but the visual field was not selected from an area of 20 µm from the surface layer side and the substrate side of the thermal-sprayed coating.
(6) The operation of (5) was repeated total 5 times, and then the quantities of the compositions in the thermal-sprayed coating of 80 divided visual fields were determined.
(7) Regarding a determined quantity value of a Ni atom on the 80 divided visual fields, a coefficient of variation (standard deviation/average value) was calculated. The result is shown at "Coefficient of variation" column in Table 1. Incidentally, the coefficient of variation is to become an indicator for evaluating the uniformity of the components in the thermal-sprayed coating. Here, as the coefficient of variation becomes smaller, the uniformity of components becomes superior.

### [Measurement of electrical conductivity in thermal-sprayed coating]

Regarding the thermal-sprayed coatings of Examples 1 to 4 and the thermal-sprayed coatings of Comparative example, the electrical conductivities were measured with a low resistivity meter (Mitsubishi Analytech, Loresta GP MCP-T610). In particular, the operations of (1) to (3) described below were performed.
(1) The thermal spraying was performed with the powder for thermal spraying of each example onto the alumina substrate (30 mm × 30 mm × 5 mm), so as to manufacture the thermal-sprayed coating of each example. Incidentally, the thermal spraying condition herein is the same as the condition described at the item <Manufacture of thermal-sprayed coating>.
(2) The reduction process was performed on the thermal-sprayed coating so as to obtain a specimen for measurement. Incidentally, the condition of the reduction process herein is the same as the condition described at the item [Thermogravimetry analysis].
(3) Under an environment, temperature: 21°C, and relative humidity: 37%, a measuring probe was made to be are attached with the specimen, and then the electrical conductivity of this specimen was measured. At 3 points for one specimen, the electrical conductivities were measured, and then the average value was calculated. The result was shown at "Electrical conductivity (× 10² S/cm)" column in Table 1.

### [Application characteristics]

Regarding the thermal-sprayed coatings of Examples 1 to 4 and the thermal-sprayed coating of Comparative example, an application characteristics was evaluated. In particular, an expression "⊚" was applied to one whose numerical value of the coefficient of variation was less than 0.09 and whose numerical value of the electrical conductivity was equal to or more than 3 × 10² S/cm, an expression "∘" was applied to one whose numerical value of the coefficient of variation was equal to or more than 0.09 and whose numerical value of the electrical conductivity was equal to or more than 3 × 10² S/cm, and an expression "×" was applied to one whose numerical value of the coefficient of variation was equal to or more than 0.09 and whose numerical value of the electrical conductivity was less than 3 × 10² S/cm, so as to evaluate the total application characteristics.

### [Table 1]

**Table 1**

| | Firing temperature (°C) | Powder for thermal spraying | | | Powder for thermal spraying (after reduction process) | Thermal-sprayed coating | | |
|---|---|---|---|---|---|---|---|---|
| | | Median diameter (µm) | Pore volume (cc/g) | Peak top position (µm) | 3% weight change point (°C) | Coefficient of variation | Electrical conductivity (× 10² S/cm) | Application characteristics |
| Example 1 | 950 | 21 | 0.10 | 0.15 | 477 | 0.085 | 4.2 | ⊚ |
| Example 2 | 1040 | 23 | 0.10 | 0.21 | 486 | 0.058 | 4.2 | ⊚ |
| Example 3 | 1200 | 20 | 0.06 | 0.23 | 517 | 0.087 | 4.5 | ⊚ |
| Example 4 | 1300 | 19 | 0.03 | 0.24 | 563 | 0.093 | 4.7 | ○ |
| Comparative example | 200 | 21 | 0.08 | 0.13 | 460 | 0.100 | 2.6 | × |

The powders for thermal spraying in accordance with Examples 1 to 4, as shown in Table 1, has the peak within the range equal to or more than 0.15 µm and not more than 1 µm, on the log differential pore volume distribution for the pore diameter being equal to or less than 1 µm obtained with the mercury penetration method. It has been found that, when the powders for thermal spraying of Examples 1 to 4 are used, the thermal-sprayed coating whose coefficient of variation is smaller than the thermal-sprayed coating of Comparative example (in other words, the thermal-sprayed coating in which the uniformity of compositions has been enhanced) as shown in Table 1 can be manufactured. The thermal-sprayed coating manufactured with each powder for thermal spraying of Examples 1 to 4 had the electrical conductivity higher than the thermal-sprayed coating of Comparative example so as to be superior in the application characteristics. From these results, it has been found that the powders for thermal spraying in accordance with Examples 1 to 4 are preferable as the powder for thermal spraying which is used to form the electrode (here, the fuel electrode) of the SOFC or the SOEC.

Above, specific examples of the herein disclosed technique have been explained, but these are merely illustrations, and are not to restrict the scope of claims. The technique recited in claims contains matters in which the above-illustrated specific examples are variously deformed or changed.

The herein disclosed technique semantically covers the disclosure in accordance with item 1 to item 9 described below.
[Item 1] A powder for thermal spraying that is for forming an electrode of a solid oxide fuel cell or a solid oxide electrolysis cell, having:
   a peak within a range equal to or more than 0.15 µm and not more than 1 µm, on a log differential pore volume distribution for a pore diameter being equal to or less than 1 µm obtained with a mercury penetration method.
[Item 2] The powder for thermal spraying recited in item 1, comprising: composite particles that comprise ceramic particles having an ion conductive property and comprise transition metal compound particles.
[Item 3] The powder for thermal spraying recited in item 2, wherein the composite particles comprise an area having no particle interface at a contact part where a primary particle and another primary particle are attached with each other.
[Item 4] The powder for thermal spraying recited in item 2 or 3, wherein a mass ratio of the ceramic particles and the transition metal compound particles (ceramic particles: transition metal compound particles) is 60:40 to 20:80.
[Item 5] The powder for thermal spraying recited in any one of items 1 to 4, wherein a median diameter (D₅₀) based on a laser diffraction scattering method is equal to or more than 10 µm and not more than 100 µm.
[Item 6] The powder for thermal spraying recited in any one of items 2 to 4, wherein the ceramic particles are zirconia particles containing a rare earth metal oxide.
[Item 7] The powder for thermal spraying recited in any one of items 2 to 4, wherein the transition metal compound particles are nickel oxide particles.
[Item 8] The powder for thermal spraying recited in any one of items 1 to 7, wherein a temperature at 3% weight increase time is equal to or more than 470°C and not more than 570°C, when the powder for thermal spraying subjected to a reduction process at 800°C processing temperature for 2 hours under a hydrogen gas atmosphere is heated under an air atmosphere at 10 K/min temperature rising speed from a room temperature to 1200°C and then a thermogravimetry analysis is performed.
[Item 9] The powder for thermal spraying recited in any one of items 1 to 8, wherein the peak is within a range equal to or more than 0.15 µm and not more than 0.23 µm.

### [Reference Signs List]

1 fuel electrode
2 air electrode
3 solid electrolyte layer
10 SOFC

## Claims

1. A powder for thermal spraying that is for forming an electrode of a solid oxide fuel cell or a solid oxide electrolysis cell, having:
a peak within a range equal to or more than 0.15 µm and not more than 1 µm, on a log differential pore volume distribution for a pore diameter being equal to or less than 1 µm obtained with a mercury penetration method.

2. The powder for thermal spraying according to claim 1, comprising:
composite particles that comprise ceramic particles having an ion conductive property, and transition metal compound particles.

3. The powder for thermal spraying according to claim 2, wherein
the composite particles comprise an area having no particle interface at a contact part where a primary particle and another primary particle are attached with each other.

4. The powder for thermal spraying according to claim 2, wherein
a mass ratio of the ceramic particles and the transition metal compound particles (ceramic particles: transition metal compound particles) is 60:40 to 20:80.

5. The powder for thermal spraying according to claim 1 or 2, wherein
a median diameter (D₅₀) based on a laser diffraction scattering method is equal to or more than 10 µm and not more than 100 µm.

6. The powder for thermal spraying according to claim 2, wherein
the ceramic particles are zirconia particles containing a rare earth metal oxide.

7. The powder for thermal spraying according to claim 2, wherein
the transition metal compound particles are nickel oxide particles.

8. The powder for thermal spraying according to claim 1 or 2, wherein
a temperature at 3% weight increase time is equal to or more than 470°C and not more than 570°C, when the powder for thermal spraying subjected to a reduction process at 800°C processing temperature for 2 hours under a hydrogen gas atmosphere is heated under an air atmosphere at 10 K/min temperature rising speed from a room temperature to 1200°C and then a thermogravimetry analysis is performed.

9. The powder for thermal spraying according to claim 1 or 2, wherein
the peak is within a range equal to or more than 0.15 µm and not more than 0.23 µm.
